(19) Europäisches Patentamt
European Patent Office
Office européen des brevets

(11) **EP 1 508 209 B1**

(12) **FASCICULE DE BREVET EUROPEEN**

(45) Date de publication et mention
de la délivrance du brevet:
**21.05.2008 Bulletin 2008/21**

(51) Int Cl.:
*H04B 17/00* (2006.01)     *H04L 5/02* (2006.01)
*H04L 27/26* (2006.01)

(21) Numéro de dépôt: **03755212.2**

(22) Date de dépôt: **27.05.2003**

(86) Numéro de dépôt international:
**PCT/FR2003/001603**

(87) Numéro de publication internationale:
**WO 2003/101015 (04.12.2003 Gazette 2003/49)**

(54) **DETERMINATION DE DECALAGE TEMPOREL ET/OU DE PUISSANCE D'UN SIGNAL MULTIPORTEUR**

BESTIMMUNG DER ZEITVERZÖGERUNG UND/ODER LEISTUNG EINES MEHRTRÄGERSIGNALS

DETERMINATION OF THE TIME DELAY AND/OR POWER OF A MULTICARRIER SIGNAL

(84) Etats contractants désignés:
**AT BE BG CH CY CZ DE DK EE ES FI FR GB GR HU IE IT LI LU MC NL PT RO SE SI SK TR**

(30) Priorité: **28.05.2002 FR 0206524**

(43) Date de publication de la demande:
**23.02.2005 Bulletin 2005/08**

(73) Titulaire: **FRANCE TELECOM**
**75015 Paris (FR)**

(72) Inventeurs:
• **LEGOUABLE, Rodolphe**
**F-35510 Cesson-Sevigne (FR)**
• **CALLONNEC, Denis**
**F-38570 Tencin (FR)**
• **HELARD, Maryline**
**F-35700 Rennes (FR)**

(74) Mandataire: **Remy, Vincent Noel Paul**
**Lhermet La Bigne & Remy**
**11, boulevard de Sébastopol**
**75001 Paris (FR)**

(56) Documents cités:
**EP-A- 0 963 068**          **GB-A- 2 346 050**
**US-A- 6 038 275**

• **LE GOUABLE R ET AL: "Performance of single and multi-user detection techniques for a MC-CDMA system over channel model used for HIPERLAN2" IEEE 6TH INT. SYMP. ON SPREAD-SPECTRUM TECH. & APPLI., 6 - 8 septembre 2000, XP010516673 NJIT, NEW JERSEY, USA**

**Description**

La présente invention concerne un procédé de détermination de décalage temporel et/ou de puissance d'un signal reçu émis entre un ou plusieurs terminaux usagers et une station de base ou entre une station de base et un ou plusieurs terminaux usagers.

L'invention concerne également un circuit de réception pour la mise en oeuvre de ce procédé, ainsi qu'un dispositif de réception.

Cette invention s'applique au domaine des transmissions de signaux par modulation multiporteuse de type OFDM (Orthogonal Frequency Division Multiplex) combiné soit à la technique d'accès multiple à répartition de codes, appelée MC-CDMA (Multi Carrier Coded Division Multiple Access), soit à la technique d'accès FDMA (Frequency Division Multiple Access), appelée OFDMA, soit à la technique d'accès TDMA (Time Division Multiple Access).

On sait qu'en matière de transmission de signaux, il est toujours nécessaire de synchroniser les signaux reçus au niveau du récepteur pour pouvoir les traiter.

Différentes techniques de synchronisation temporelle ont déjà été proposées dans différents contextes.

En particulier, les normes décrites dans les documents ETSI "Radio Broadcasting Systems ; Digital Audio Broadcasting (DAB) to mobile, portable and fixed receivers" (avril 2000, référence EN 300 401 V1.3.1) et ETSI "Digital Video Broadcasting (DVB) ; Framing structure, channel coding and modulation for digital terrestrial television" (juillet 1999, référence EN 300 744 V1.2.1) proposent des techniques de modulation temporelle relativement complexes.

Dans le contexte particulier du standard DVB-RCT qui concerne la télévision numérique terrestre interactive, il est particulièrement important de pouvoir disposer d'un procédé de synchronisation qui ne requiert pas trop de puissance de calcul de la part des moyens de traitement numérique des signaux car la diffusion du réseau terrestre ne doit pas être entravée par le prix de revient des récepteurs.

Dans le contexte d'un système OFDMA, on sait que chaque usager émet une séquence de référence sur un ensemble de porteuses réparties de façon aléatoire, chaque ensemble de porteuse étant propre à cet usager.

Cette séquence de référence existe également dans le contexte d'un système MC-CDMA où un ou plusieurs usagers, formant un groupe d'usagers, émet sur un même ensemble de porteuses, chaque usager utilisant sa propre séquence de référence, laquelle est alors désignée "code".

L'invention repose sur l'existence d'une telle séquence de référence dans les signaux transmis et s'applique à tout système de transmission de signaux par modulation multiporteuse dans lequel les signaux incorporent une séquence de référence. Un procédé de synchronisation pour un tel système de transmission est décrit dans le document US 6038275 (Mitsubishi), 14.03.2000.

La présente invention a pour objet un procédé de détermination de décalage temporel et/ou de puissance d'un signal reçu incorporant une'séquence de référence et transmis par modulation multiporteuse sur un ensemble de porteuses espacées les unes des autres d'une distance $n.\Delta f$ où $n$ est un entier naturel et $\Delta f$ est une constante, caractérisé en ce qu'il consiste à :

- déterminer une variation de phase représentative de la variation de phase existant entre deux composantes, sur deux porteuses distantes de $k.\Delta f$, de la séquence de référence du signal reçu, pour au moins deux valeurs consécutives de l'entier $k$,
- appliquer une transformation de Fourier inverse sur les variations de phase représentatives obtenues afin d'obtenir la réponse impulsionnelle du signal,
- déterminer le décalage temporel et/ou la puissance du signal reçu à partir de la réponse impulsionnelle, par observation du pic d'amplitude de plus haut niveau.

Ainsi l'invention consiste à rechercher, entre les différentes porteuses véhiculant le signal, la variation de phase qui correspond au décalage temporel du signal.

On détermine les variations de phase entre les différentes porteuses par une démodulation différentielle et l'on rapporte les variations de phase ainsi déterminées à des familles de couples de porteuses, chaque famille regroupant des couples de porteuses dans lesquels les deux porteuses sont distantes du même multiple entier de $\Delta f$, $\Delta f$ pouvant être qualifié d'écart interporteuse élémentaire entre les porteuses utilisées.

Ayant réordonné les variations de phase obtenues par multiples croissants ou décroissants mais contigus de l'écart interporteuse élémentaire $\Delta f$, on peut appliquer une transformée de Fourier inverse pour obtenir la réponse impulsionnelle du signal et en déduire soit le décalage temporel, soit la puissance du signal reçu, simplement à partir du pic d'amplitude fourni par la réponse impulsionnelle.

En effet, le procédé selon l'invention fournit non seulement le décalage temporel du signal mais également, par mesure de la hauteur du pic d'amplitude fourni, une information de puissance caractéristique du signal reçu.

On peut ainsi contrôler la puissance des différents utilisateurs qui souhaitent cohabiter sur une même bande de fréquence, par rétroaction sur leurs émetteurs.

L'ajustement du contrôle de puissance permet d'obtenir que les signaux émis par tous les utilisateurs soient reçus avec le même niveau de puissance par le récepteur. Cet ajustement des puissances limite par conséquent le problème d'aveuglement, en empêchant qu'un utilisateur qui émet avec une forte puissance vienne fortement perturber les signaux émis par les autres utilisateurs.

Ainsi que cela apparaîtra à la lecture des exemples donnés ci-après, la complexité du procédé selon l'invention dépend essentiellement de deux paramètres, à savoir d'une part le nombre Nfft de valeurs de l'entier k pour lesquelles on détermine une variation de phase représentative, d'autre part la méthode de détermination de la variation de phase représentative pour chaque valeur de k, sachant qu'il peut exister plusieurs couples de porteuses distantes de l'écart $k\Delta f$.

Dans un mode de mise en oeuvre particulier de l'invention, on détermine la variation de phase représentative pour une valeur de k en calculant la moyenne des variations de phase de plusieurs couples de composantes de la séquence de référence reçue portées par des porteuses distantes de $k.\Delta f$.

Dans ce cas, le nombre de termes utilisés pour calculer cette moyenne est un paramètre important permettant de régler la complexité du procédé selon l'invention.

Le procédé selon l'invention se met en oeuvre d'autant plus aisément que l'ensemble de porteuses utilisées pour la transmission du signal permet de constituer des couples de porteuses dans lesquels deux porteuses d'un couple sont distantes d'un écart $k\Delta f$ où k varie de 1 à Nfft.

Dans le cadre du standard DVB-RCT, chaque ensemble de porteuses (qui est également désigné "sous canal") utilisable par un groupe d'utilisateurs est composé de 145 porteuses pouvant être regroupées par couples couvrant toutes les valeurs de k allant de 1 à 256.

Dans l'hypothèse où, parmi toutes les porteuses d'un sous-canal, il ne serait pas possible d'en sélectionner deux qui soient distantes de l'écart $k\Delta f$, l'invention propose soit de retenir la valeur nulle comme variation de phase représentative pour cette valeur de k, soit de retenir la moyenne des variations de phase représentatives obtenues pour les valeurs adjacentes de k.

C'est notamment le cas dans la norme DVB-RCT pour les valeur suivantes de k entre 1 et 512, pour le sous-canal d'indice 0 du mode 1 K : 406, 435, 464 et 493.

Dans un autre mode de mise en oeuvre du procédé selon l'invention, pour chaque valeur de l'entier k, on calcule d'abord la variation de phase entre deux composantes du signal reçu portées par une première et une seconde porteuses distantes de $k.\Delta f$, puis on détermine la variation de phase représentative en multipliant la variation de phase obtenue par le produit de la composante sur la première porteuse de la séquence de référence et de la conjuguée de la composante sur la seconde porteuse de la séquence de référencé.

Outre que cet autre mode de mise en oeuvre réduit le nombre d'opérations à effectuer en ne calculant plus de moyenne entre les variations de phase, il prévoit une multiplication par un produit connu à l'avance dont les différentes valeurs peuvent être préenregistrées.

Selon une variante particulièrement avantageuse de ce mode de mise en oeuvre, appliquée à une transmission de signaux dans laquelle les porteuses sont régulièrement réparties, on calcule la variation de phase entre, d'une part, une composante dite "de base" du signal reçu sur une porteuse de base, choisie parmi les porteuses utilisées pour servir de porteuse de base, par exemple la première porteuse du spectre, et d'autre part une composante obtenue en retardant k fois la composante de base d'un espacement interporteuse $k.\Delta f$.

En d'autres termes, on tient compte du fait que les porteuses sont régulièrement réparties pour ne considérer que les k premiers couples de porteuses formés d'une part par la porteuse de base, d'autre part par les k premières porteuses du spectre.

Dans le cas de porteuses régulières, il n'est en effet pas utile de considérer toutes les porteuses disponibles pour retrouver les espacements consécutifs recherchés.

L'invention a également pour objet un circuit de réception apte à déterminer le décalage temporel et/ou la puissance d'un signal reçu incorporant une séquence de référence et transmis par modulation multiporteuse sur un ensemble de porteuses espacées les unes des autres d'une distance $n.\Delta f$ où n est un entier naturel et $\Delta f$ est une constante, caractérisée en ce qu'il comprend :

- des moyens pour déterminer une variation de phase représentative de la variation de phase existant entre deux composantes, sur deux porteuses distantes de $k.\Delta f$, de la séquence de référence du signal reçu, pour au moins deux valeurs consécutives de l'entier k,
- des moyens pour appliquer une transformation de Fourier inverse sur les variations de phase représentatives obtenues afin d'obtenir la réponse impulsionnelle du signal,
- des moyens pour déterminer le décalage temporel et/ou la puissance du signal reçu à partir de la réponse impulsionnelle, par observation du pic d'amplitude de plus haut niveau.

Afin de faciliter la compréhension de l'invention, on va maintenant en décrire des exemples de réalisation, ces exemples étant fournis uniquement à titre d'illustrations et ne présentant aucun caractère limitatif.

Les exemples utilisés pour expliquer l'invention se situent dans le contexte de la mise en oeuvre de la synchronisation temporelle et du contrôle de puissance basés sur la technique MC-CDMA qui est utilisée dans le projet de standard DVB-RCT de télévision numérique terrestre interactive.

L'homme du métier saura identifier, dans ces exemples, l'utilisation qui est faite de la séquence de référence (qui est ici désignée code) et saura transposer l'invention à d'autres normes mettant aussi en oeuvre une séquence de référence.

Sur les dessins :

- la figure 1 représente un synoptique d'une chaîne de transmission MC-CDMA utilisant un mode de mise en oeuvre du procédé selon l'invention,
- la figure 2 est une représentation de sept porteuses utilisées pour transmettre un signal,
- la figure 3 est analogue à la figure 2 et montre les écarts entre porteuses prises deux à deux,
- la figure 4 représente un synoptique d'une chaîne de réception MC-CDMA utilisant un autre mode de mise en oeuvre du procédé selon l'invention,
- la figure 5 représente un synoptique d'une chaîne de réception MC-CDMA correspondant à une variante de la figure 4 appliquée à un système dans lequel les porteuses portant la séquence de référence sont régulièrement réparties,
- la figure 6 représente le graphe de la réponse impulsionnelle obtenue en mettant en oeuvre le procédé selon l'invention en considérant un seul utilisateur,
- la figure 7 est analogue à la figure 6 mais considère deux utilisateurs.

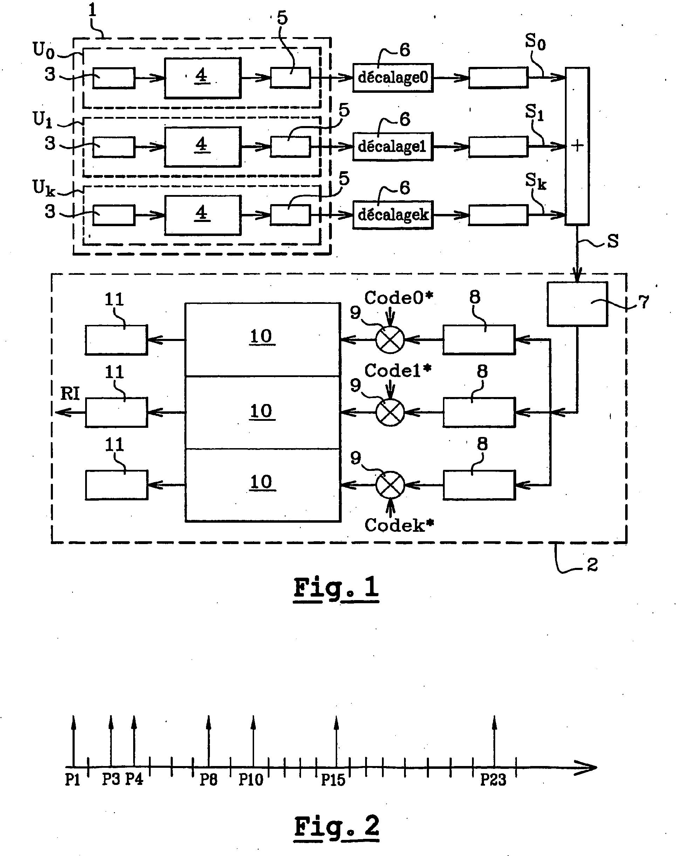

La figure 1 donne le synoptique d'une chaîne de transmission sur liaison montante. Cette chaîne de transmission comprend un groupe 1 de K+1 terminaux usagers et une station de base 2 qui joue le rôle de démodulateur pour retrouver, parmi tous les signaux $S_0,...,S_K$ reçus qui se confondent en un signal global reçu S, les signaux envoyés par chacun des usagers.

Dans son terminal $U_0,...,U_K$, chaque usager émet un code $0,...,K$ référencé 3 qui lui est propre sur un ensemble M de sous porteuses sélectionné lors d'une étape 4.

Sur la figure 1 est représenté uniquement le cas où K+1 utilisateurs émettent sur l'ensemble M des porteuses.

Les K+1 usagers peuvent émettre simultanément leur propre séquence de référence, désignée ici code, sur le même ensemble M de porteuses, tandis qu'au même instant, K'+1 autres usagers (groupe non représenté) peuvent émettre simultanément sur un autre ensemble M' de porteuses.

Chaque ensemble de porteuses est appelé sous canal. Les deux premiers sous-canaux du mode 1 K du standard DVB-RCT sont donnés ci-après à titre d'exemples.

<u>**Sous-canal 0 :**</u>
```
8 10 13 14 24 37 42 43 51 53 66 72 75 80 82 95 104 109 111 112 124 133 134
138 141 151 162 163 167 170 176 180 191 192 199 205 209 221 223 228 234 238
250 252 258 263 267 281 287 289 292 309 310 316 318 335 338 339 345 347 348
364 367 374 376 377 392 393 396 405 406 411 422 423 426 436 441 451 452 457
465 470 472 480 486 499 501 506 509 515 527 528 530 535 544 556 559 563 564
573 585 588 592 593 604 614 621 622 633 637 643 648 650 662 666 671 677 679
691 695 698 700 706 720 724 727 729 735 736 753 756 758 764 765 768 785 787
794 797 798 814 823 826 827 837
```

<u>**Sous-canal 1 :**</u>
```
6 17 18 22 25 31 35 46 47 54 60 64 76 78 83 89 93 105 107 113 118 122 136
142 144 147 164 165 171 173 190 193 194 200 202 203 219 222 229 231 232 247
248 251 260 261 266 276 277 280 290 295 305 306 311 319 324 326 334 340 353
355 360 363 369 381 382 384 389 398 410 413 417 418 428 440 443 447 448 459
469 476 477 488 492 498 503 505 517 521 526 532 534 546 550 553 555 561 575
579 582 584 590 591 608 611 613 619 620 623 640 642 649 652 653 669 678 681
682 692 705 707 710 711 721 734 739 740 748 750 763 769 772 777 779 792 801
806 808 809 821 830 831 835 838
```

Chaque sous-canal est composé de 145 porteuses. Les ensembles M et M' de sous porteuses permettent d'obtenir toutes les valeurs de k allant de 1 à 256 (pour k= 1 à 512, quatre valeurs de k doivent être déterminées par interpolation).

Pour l'exposé du procédé de détermination de décalage temporel, on considère sept sous porteuses P1, P3, P4, P8, P10, P15 et P23 du spectre OFDM dont une représentation est donnée à la figure 2.

Les signaux à émettre sont modulés par un modulateur 5 par une transformée de Fourier inverse, puis émis.

Puisque les différents usagers émettent de façon asynchrone vers la station de base, chaque usager est reçu avec un décalage temporel qui lui est propre, comme cela est schématisé en 6.

Si $x_j(t)$ est le signal émis par l'utilisateur j sur un symbole OFDM de durée Ts, dont le spectre des différentes porteuses résulte d'un filtrage de mise en forme rectangulaire dans le domaine temporel, alors l'expression de $x_j(t)$ est donnée par

$$x_j(t)=\sum_{k\in M}\Re e\left(C_{n_k}^{j}\ \exp(2i\pi\ f_k\ (t+\tau_j))\right) \qquad (1)$$

Dans (1), $C_{n_k}^{j}$ correspond au chip d'indice $n_k$ (un chip est une fraction du code émis) du code de l'utilisateur j modulant la porteuse k (on parle également de composante sur la porteuse k de la séquence de référence) et $\tau_j$ est le retard avec lequel le signal de l'utilisateur j arrive à la station de base.

Dans la station de base 2, le signal global reçu est transposé dans le domaine fréquentiel grâce à une transformée de Fourier directe par un démodulateur 7.

On va maintenant expliquer le déroulement du procédé de détermination de décalage temporel dans la station de base.

Par la suite, on ne considère qu'un seul utilisateur dont le signal émis est retardé de $\tau_0$.

Le signal reçu y(t) correspond au signal émis affecté d'une perturbation $H_k$ liée à un affaiblissement et à une rotation de phase introduite par le canal sur chaque sous-porteuse.

L'expression du signal reçu y(t) est :

$$y(t)=\sum_{k\in M}\Re e\left(H_k C_{n_k}\ \exp(2i\pi\ f_k\ (t+\tau_0))\right) \qquad (2)$$

Après application, lors de l'étape 7, de la transformée de Fourier en réception, le signal reçu sur chacune des sous-porteuses k vaut :

$$Y_k = H_k C_{n_k} \exp(-2i\pi f_k \tau_0) \qquad (3)$$

Les porteuses de l'ensemble M sont extraites en 8, puis, par le multiplicateur 9, on effectue la multiplication complexe conjuguée entre le signal reçu sur chaque sous-porteuse et le chip du code propre à l'utilisateur et connu du récepteur, puis on calcule une variation de phase représentative à l'aide d'un démodulateur différentiel 10.

La détermination de la variation de phase de représentation s'appuie sur une méthode différentielle fréquentielle, qui permet d'obtenir la variation de la phase moyenne entre différents couples de porteuses, prises dans l'ensemble M, distantes de $k\Delta f$ avec k=1,...,Nfft.

$\Delta f$ correspond à l'espacement inter-porteuse qui est égal à $1/t_s$, où $t_s$ est la durée utile du symbole OFDM.

Nfft correspond à une valeur paramétrable, dépendant à la fois de l'ensemble M et de la complexité envisagée pour le système.

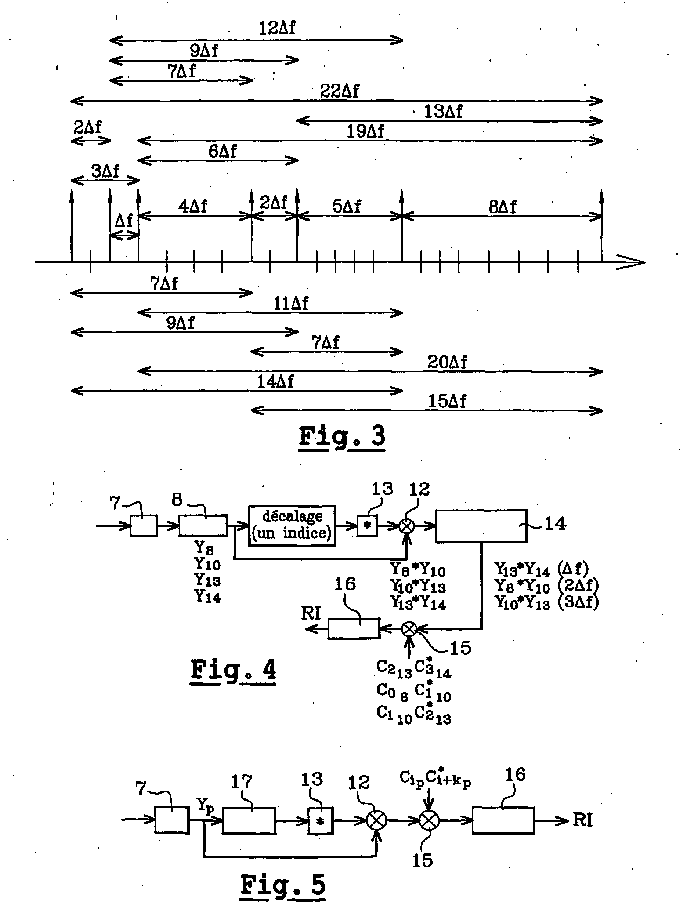

La figure 3 répertorie l'ensemble des couples de porteuses répondant à différentes valeurs de k.

La variation de phase entre deux signaux distants de $\Delta f$ est obtenue en réalisant la démodulation différentielle entre le signal porté par la porteuse P4 et le signal porté par la porteuse P3.

L'opération effectuée est P4.P3* ou P3* correspond à la valeur conjuguée de P3.

Il est ainsi possible de déterminer l'ensemble des valeurs relatives à chaque valeur de k.

Si plusieurs couples de porteuses répondent à une même valeur de k, alors la moyenne entre les démodulations différentielles obtenues pour cette valeur de k peut être effectuée.

Dans l'exemple de la figure 3, l'écart $2\Delta f$ est obtenu lorsqu'on considère les couples de porteuses {P1, P3} et {P8, P10}. Dans ce cas, il est possible d'effectuer la moyenne entre les démodulations différentielles qui est

$$\underline{P3P1^*+P10P8^*}$$
$$2$$

Ce moyennage a pour but d'obtenir une meilleure estimée de la variation de phase entre deux porteuses distantes de $k\Delta f$, moyennant les différentes perturbations rencontrées (fluctuations du canal de propagation, interférences d'accès multiples, bruit...). Cette valeur est retenue comme variation de phase représentative pour la valeur k.

Si l'ensemble M des porteuses ne permet pas d'obtenir toutes les valeurs de k souhaitées, il est possible, soit de considérer que la valeur de la démodulation différentielle, correspondant à cette valeur de k est nulle, soit de réaliser une opération d'interpolation, en considérant les indices de k, les plus proches de la valeur de k non répertoriée, pour lesquels une démodulation différentielle peut être définie. La dernière possibilité donne de meilleurs résultats.

En appliquant cette démodulation différentielle aux huit premiers indices de porteuses du sous canal 0 du mode 1 K, on obtient l'ensemble des valeurs suivantes en sortie de chaque démodulateur différentiel 10 :

$$C_3 C_3^* H_{14} \exp(-2i\pi\, f_{14}\, \tau_0)\, (C_2 C_2^* H_{13} \exp(-2i\pi\, f_{13}\, \tau_0))^* + C_7 C_7^* H_{43} \exp(-2i\pi\, f_{43}\, \tau_0)\, (C_6 C_6^* H_{42} \exp(-2i\pi\, f_{42}\, \tau_0))^*;$$
$$C_1 C_1^* H_{10} \exp(-2i\pi\, f_{10}\, \tau_0)\, (C_0 C_0^* H_8 \exp(-2i\pi\, f_8\, \tau_0))^*;\, C_2 C_2^* H_{13} \exp(-2i\pi\, f_{13}\, \tau_0)\, (C_1 C_1^* H_{10} \exp(-2i\pi\, f_{10}\, \tau_0))^*;$$
$$C_3 C_3^* H_{14} \exp(-2i\pi\, f_{14}\, \tau_0)\, (C_1 C_1^* H_{10} \exp(-2i\pi\, f_{10}\, \tau_0))^*;\, C_2 C_2^* H_{13} \exp(-2i\pi\, f_{13}\, \tau_0)\, (C_0 C_0^* H_8 \exp(-2i\pi\, f_8\, \tau_0))^*;...$$

$$(4)$$

ce qui conduit à l'ensemble des valeurs suivantes (rangées par ordre croissant de $k\Delta f$):

$$(H_{14} H_{13}^* + H_{43} H_{42}^*)\exp(-2i\pi\Delta f\,\tau_0);\, H_{10} H_8^* \exp(-4i\pi\Delta f\,\tau_0);\, H_{13} H_{10}^* \exp(-6i\pi\Delta f\,\tau_0);\, H_{14} H_{10}^* \exp(-8i\pi\Delta f\,\tau_0)$$
$$;\, H_{13} H_8^* \exp(-10i\pi\,\Delta f\,\tau_0);...\quad (5)$$

l'ensemble des valeurs de (5) peut se généraliser à :

$$\sum_{\substack{k\in M \\ k-1\in M}} H_k H_{k-1}^* \exp(-2i\pi\,\Delta f\,\tau_0);\quad \sum_{\substack{k\in M \\ k-2\in M}} H_k H_{k-2}^* \exp(-4i\pi\,\Delta f\,\tau_0);...;\quad \sum_{\substack{k\in M \\ k-Nfft\in N}} H_k H_{k-Nfft}^* \exp(-2*Nfft*i\pi\,\Delta f\,\tau_0)$$

$$(6)$$

Ce qui est recherché au travers de l'ensemble des termes de l'expression (6) est de moyenner les fluctuations du canal sur l'ensemble des porteuses distantes de $k\Delta f$ afin de mieux estimer la réponse impulsionnelle du canal de propagation et donc le retard de propagation en réception. Il est donc nécessaire de normaliser chaque terme

$$\sum_{\substack{k\in M \\ k'\in M}} H_k H_{k'}^*$$

par le nombre de sommes composant ce terme.

Pour un canal à trajet unique $H_k = H_{K'}^* = 1$, chaque terme de l'expression (4) devient :

$$\sum_{k=1}^{Nfft} \exp(-2i\pi\, k\Delta f\tau_0) \qquad (7)$$

Une transformée de Fourier inverse appliquée sur l'équation (7) par un modulateur 11, afin d'obtenir la réponse impulsionnelle RI du canal, fournit :

$$(7) \xrightarrow{\ IFFT\ } \delta(t-\tau_0) \qquad (8)$$

Cette méthode permet d'obtenir un Dirac centré en $\tau_0$, relatif au décalage temporel du signal émis.

Le décalage temporel est ainsi déterminé.

On voit qu'au-delà des performances atteintes par le procédé selon l'invention, il est possible d'ajuster sa complexité.

En effet, la complexité de ce procédé dépend à la fois de la taille de la transformée de Fourier inverse nécessaire à l'obtention de la réponse impulsionnelle du canal et du nombre de points de moyennage (Pt_moy) pour chaque valeur de k, servant à la détermination de la variation de phase représentative pour chaque écart de k.$\Delta$f.

L'équation (9) donne le nombre de multiplications complexes nécessaires au démodulateur afin de mettre en oeuvre la méthode proposée.

$$\underbrace{\frac{Nfft\_glob}{2} * \log_2 \frac{Nfft\_glob}{2}}_{FFT\ globale\ de\ réception} + \underbrace{K*N}_{multiplications\ par\ codes} + \underbrace{K*Nfft*pt\_moy}_{méthode\ différentielle} + \underbrace{K*Nfft}_{divisions\ pour\ moyenne} + \underbrace{K*\frac{Nfft}{2}\log_2 \frac{Nfft}{2}}_{Passage\ dans\ le\ domaine\ temporel\ par\ IFFT}$$

$$(9)$$

Dans l'équation (9), Nfft_glob correspond au nombre de points de la transformée de Fourier en réception, K est le nombre total de séquences de codes possibles, N est la taille du code émis, Nfft est le nombre de points sur lequel on souhaite réaliser la transformée de Fourier inverse pour la détermination de la réponse impulsionnelle de chaque canal et Pt_moy est le nombre de points servant au moyennage pour l'obtention de la variation de phase représentative pour chaque valeur de k.$\Delta$f avec k=1,....,Nfft.

Il est nécessaire, afin d'obtenir une bonne représentation de la réponse impulsionnelle du canal, d'ajuster les valeurs de Nfft et de Pt_moy en tenant compte de la complexité qu'elles engendrent.

Les valeurs prises par ces deux constantes dépendent des paramètres système (nombre de porteuses composant l'ensemble M, valeurs des indexes des porteuses de M,...) et doivent être ajustées suivant la nature des différentes perturbations rencontrées (fluctuations du canal de propagation, interférences d'accès multiples, bruit...).

On constate qu'un des facteurs de complexité du procédé selon l'invention est le calcul d'une moyenne de variation de phase pour obtenir une variation de phase représentative pour une valeur de k donnée.

Si l'on décide de ne pas recourir à une telle moyenne, on peut simplifier d'avantage le procédé.

Ainsi, comme on le voit sur la figure 4, après application par le démodulateur 7 de la transformée de Fourier directe en réception, l'extracteur 8 extrait l'ensemble des porteuses (ensemble M) sur lesquelles le code a été émis. La figure 4 reprend, pour les sous-porteuses, les indices du sous canal 0 du mode 1 K du standard DVB-RCT.

On effectue la démodulation différentielle par le multiplicateur 12 sur l'ensemble M en considérant les porteuses prises dans leur ordre d'extraction (deux porteuses successives étant distantes de k$\Delta$f avec k=1 ,...,Nfft).

L'opérateur 13 fournit au multiplicateur 12 la conjuguée de la porteuse précédemment extraite, pour multiplication avec la porteuse en cours d'extraction.

Connaissant les indices des porteuses de l'ensemble M qui vérifient les écarts de k$\Delta$f, on ordonne, dans la mémoire 14, par ordre croissant ou décroissant de k, les valeurs des démodulations différentielles relatives (une valeur pour chaque valeur de k)

Chacune des k valeurs issues de la démodulation différentielle est alors multipliée, par le multiplicateur 15 avec le terme $C_{i',p}C_{j',p}^{*}$ (avec i-i'=k), recensé dans un fichier, propre à l'ensemble M et à l'usager.

A ce stade, on dispose des Nfft échantillons nécessaires à l'application par le modulateur 16 de la transformée de Fourier inverse permettant d'obtenir la réponse impulsionnelle RI du canal de propagation.

Le décalage temporel et la variation d'amplitude peuvent être déterminés afin de réajuster la synchronisation temporelle et le contrôle de puissance de l'usager.

Dans ce cas, le nombre de multiplications complexes pour un utilisateur vaut :

$$\underbrace{\frac{Nfft\_glob}{2}*\log_2\frac{Nfft\_glob}{2}}_{FFT\ globale\ de\ réception} + \underbrace{2*Nfft}_{démodulation\ différentielle+multiplication\ par\ C_jC^*_{j+k}} + \underbrace{\frac{Nfft}{2}\log_2\frac{Nfft}{2}}_{Passage\ dans\ le\ domaine\ temporel\ par\ IFFT} \qquad (10)$$

Dans l'Equation 11, $N_{port\_M}$ correspond au nombre de porteuses de l'ensemble M, ce nombre est naturellement supérieur au nombre de points de la transformée de Fourier inverse à calculer.

Ce procédé peut encore se simplifier si les séquences de référence sont émises sur des porteuses régulièrement réparties. Dans ce cas, l'espacement interporteuses est respecté et il est par définition égal à $k\Delta f$ pour les Nfft premières porteuses du spectre.

On peut alors se borner à calculer la démodulation différentielle pour les Nfft premiers couples de porteuses et non plus pour l'ensemble des couples de porteuses pouvant être formées pour chaque valeur de k.

Ainsi, comme l'illustre le synoptique de la figure 5, après application de la transformée de Fourier en réception par le démodulateur 7, on réalise tout d'abord la démodulation différentielle en choisissant une porteuse de base $Y_p$ (première porteuse du spectre par exemple). Cette porteuse est retardée de k fois en 17 (k=1,..., Nfft) afin d'effectuer Nfft démodulations différentielles par le multiplicateur 12 et l'opération de conjugaison 13.

Chaque point issu de la démodulation différentielle est immédiatement multiplié par le multiplicateur 15 avec le terme $C_{i,p}C_i+_{k,p}{}^*$, terme calculé par avance et stocké dans un fichier ($C_{i,p}$ correspond au ième chip porté par la porteuse p).

Il est alors possible de réaliser en 16 la transformée de Fourier inverse sur Nfft points, comme auparavant, afin d'obtenir la réponse impulsionnelle du canal de propagation et d'en déduire le décalage temporel et la variation d'amplitude qui serviront à réajuster la synchronisation temporelle et le contrôle de puissance de l'usager.

Dans ce cas, le nombre de multiplications complexes pour un utilisateur vaut :

$$\underbrace{\frac{Nfft\_glob}{2}*\log_2\frac{Nfft\_glob}{2}}_{FFT\ globale\ de\ réception} + \underbrace{N_{port\_M}-1}_{démodulation\ différentielle} + \underbrace{Nfft}_{multiplication\ par\ C_jC^*_j} + \underbrace{\frac{Nfft}{2}\log_2\frac{Nfft}{2}}_{Passage\ dans\ le\ domaine\ temporel\ par\ IFFT} \qquad (11)$$

Ce qui se traduit par une diminution très sensible de la complexité.

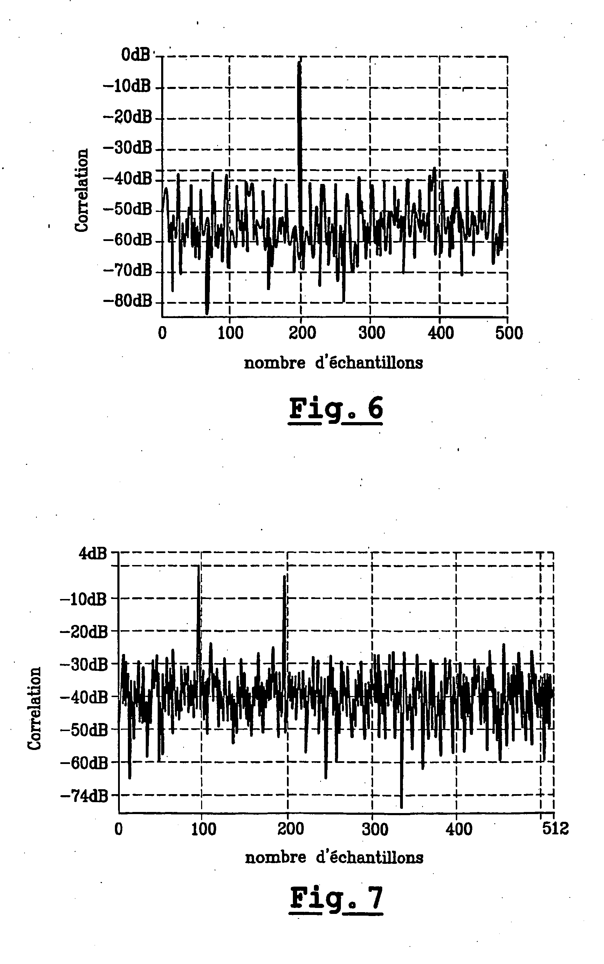

La figure 6 montre la réponse impulsionnelle obtenue avec le procédé selon l'invention en calculant une transformée de Fourier inverse sur 512 points et en considérant le cas où un seul utilisateur émet avec une puissance unitaire et avec un retard relatif de $0,3847.T_s$, $T_s$, étant la durée utile du symbole, c'est-à-dire l'inverse de l'espacement interporteuse $\Delta f$.

Ce retard correspond à 394 échantillons pour une transformée de Fourier inverse sur 1024 points et à 197 pour une transformée de Fourier inverse sur 512 points.

On constate que le retard d'émission est retrouvé ainsi que le niveau de puissance reçue.

La dynamique, c'est-à-dire la différence entre le pic de plus haute amplitude et les pics secondaires est de 37dB.

La figure 7 représente la réponse impulsionnelle obtenue dans le cas où deux utilisateurs émettent simultanément, le second utilisateur étant reçu avec un retard de $0,1835.T_s$.

Il est bien entendu que les exemples de réalisation qui viennent d'être décrits ne présentent aucun caractère limitatif et qu'ils pourraient recevoir toute modification désirable sans sortir pour cela du cadre de l'invention tel que défini par les revendications.

**EP 1 508 209 B1**

**Revendications**

1.  Procédé de détermination de décalage temporel et/ou de puissance d'un signal reçu incorporant une séquence de référence (3) et transmis par modulation multiporteuse sur un ensemble (M) de porteuses espacées les unes des autres d'une distance nΔf où n est un entier naturel et Δf est une constante, **caractérisé en ce qu'**il consiste à :

    - déterminer une variation de phase représentative de la variation de phase existant entre deux composantes, sur deux porteuses distantes de kΔf, de la séquence de référence du signal reçu, pour au moins deux valeurs consécutives de l'entier k,
    - appliquer une transformation de Fourier inverse sur les variations de phase représentatives obtenues afin d'obtenir la réponse impulsionnelle (RI) du signal,
    - déterminer le décalage temporel $\tau_0$ et/ou la puissance du signal reçu à partir de la réponse impulsionnelle, par observation du pic d'amplitude de plus haut niveau.

2.  Procédé selon la revendication 1, dans lequel on obtient la composante sur une porteuse de la séquence de référence du signal reçu en multipliant la composante ($C_{i,p}$) du signal reçu sur ladite porteuse par la conjuguée ($C^*_{j,p}$) de la composante sur cette porteuse de la séquence de référence.

3.  Procédé selon la revendication 2, dans lequel on détermine la variation de phase représentative pour une valeur de k en calculant la moyenne des variations de phase de plusieurs couples de composantes de la séquence de référence reçue portées par des porteuses distantes de kΔf.

4.  Procédé selon l'une quelconque des revendications 1 et 3, dans lequel, s'il n'existe pas de couple de porteuses distantes de kΔf, on retient la valeur nulle comme variation de phase pour cette valeur de k.

5.  Procédé selon l'une quelconque des revendications 1 et 3, dans lequel, s'il n'existe pas de couple de porteuses distantes de kΔf, on retient la moyenne des variations de phase représentatives obtenues pour les valeurs adjacentes de k comme variation de phase pour cette valeur de k.

6.  Procédé selon la revendication 1, dans lequel, pour chaque valeur de l'entier k, on calcule d'abord la variation de phase entre deux composantes du signal reçu portées par une première et une seconde porteuses distantes de kΔf, puis on détermine la variation de phase représentative en multipliant la variation de phase obtenue par le produit de la composante sur la première porteuse de la séquence de référence et de la conjuguée de la composante sur la seconde porteuse de la séquence de référence.

7.  Procédé selon la revendication 6, dans lequel, pour chaque valeur de l'entier k, on calcule la variation de phase entre d'une part une composante de base du signal reçu sur une porteuse de base ($Y_p$), choisie comme telle parmi les porteuses utilisées, et d'autre part une composante obtenue en retardant k fois la composante de base d'un espacement interporteuses Δf.

8.  Application du procédé selon l'une quelconque des revendications 1 à 7 à une modulation multiporteuse de type OFDM, acronyme de Orthogonal Frequency Division Multiplex, combinée à la technique d'accès MC-CDMA, acronyme de Multi-Carrier - Coded Division Multiple Access ou accès multiple à répartition de code.

9.  Application du procédé selon l'une quelconque des revendications 1 à 7 à une modulation multiporteuse de type OFDMA, c'est-à-dire une modulation multiporteuse de type OFDM, acronyme de Orthogonal Frequency Division Multiplex, combinée à la technique d'accès FDMA acronyme de Frequency Division Multiple Access).

10. Application du procédé selon l'une quelconque des revendications 1 à 7 à une modulation multiporteuse de type OFDM, acronyme de (Orthogonal Frequency Division Multiplex, combinée à la technique d'accès TDMA, acronyme de Time Division Multiple Access.

11. Circuit de réception apte à déterminer le décalage temporel et/ou la puissance d'un signal reçu incorporant une séquence de référence et transmis par modulation multiporteuse sur un ensemble de porteuses espacées les unes des autres d'une distance n.Δf où n est un entier naturel et Δf est une constante, **caractérisé en ce qu'**il comprend :

    - des moyens pour déterminer une variation de phase représentative de la variation de phase existant entre deux composantes, sur deux porteuses distantes de k.Δf, de la séquence de référence du signal reçu, pour au moins deux valeurs consécutives de l'entier k,
- des moyens pour appliquer une transformation de Fourier inverse sur les variations de phase représentatives obtenues afin d'obtenir la réponse impulsionnelle du signal,
- des moyens pour déterminer le décalage temporel et/ou la puissance du signal reçu à partir de la réponse impulsionnelle, par observation du pic d'amplitude de plus haut niveau.

12. Récepteur de signaux du type incorporant une sèquence de rèfèrence et transmis par modulation multiporteuse sur un ensemble de porteuses espacées les unes des autres d'une distance n.Δf où n est en entier naturel et Δf est une constante, **caractérisé en ce qu'**il comprend un circuit de réception selon la revendication 11.

## Claims

1. Method of determining the time offset and/or strength of a received signal incorporating a reference sequence (3) and transmitted by multicarrier modulation on a set (M) of carriers spaced apart from each other by a distance nΔf, where n is a natural integer and Δf is a constant, **characterized in that** it consists in:

   - determining a phase variation representative of the phase variation existing between two components, on two carriers kΔf apart, of the reference sequence of the received signal, for at least two consecutive values of the integer k,
   - applying an inverse Fourier transform to the representative phase variations obtained in order to obtain the impulse response (RI) of the signal,
   - determining the time offset $\tau_o$ and/or the strength of the received signal from the impulse response, by observing the higher level amplitude peak.

2. Method according to Claim 1, in which the component on a carrier of the reference sequence of the received signal is obtained by multiplying the component ($C_{j,p}$) of the signal received on said carrier by the conjugate ($C^*_{j,p}$) of the component on this carrier of the reference sequence.

3. Method according to Claim 2, in which the representative phase variation for a value of k is determined by calculating the average of the phase variations of a number of pairs of components of the received reference sequence carried by carriers kΔf apart.

4. Method according to either of Claims 1 and 3, in which, if there is no pair of carriers kΔf apart, the zero value is retained as phase variation for this value of k.

5. Method according to either of Claims 1 and 3, in which, if there is no pair of carriers kΔf apart, the average of the representative phase variations obtained for the adjacent values of k is retained as phase variation for this value of k.

6. Method according to Claim 1, in which, for each value of the integer k, the phase variation between two components of the received signal carried by a first and a second carrier kΔf apart is first calculated, then the representative phase variation is determined by multiplying the phase variation obtained by the product of the component on the first carrier of the reference sequence and the conjugate of the component on the second carrier of the reference sequence.

7. Method according to Claim 6, in which, for each value of the integer k, the phase variation is calculated between on the one hand a basic component of the signal received on a base carrier (Yp), chosen as such from the carriers used, and on the other hand a component obtained by delaying k times the basic component of an intercarrier spacing Δf.

8. Application of the method according to any one of Claims 1 to 7 to a multicarrier modulation of OFDM type, acronym of orthogonal frequency division multiplexing, combined with the MC-CDMA, acronym of multicarrier - coded division multiple access, access technique.

9. Application of the method according to any one of Claims 1 to 7 to a multicarrier modulation of OFDMA type, that is, a multicarrier modulation of OFDM type, acronym of orthogonal frequency division multiplexing combined with the FDMA, acronym of frequency division multiple access, access technique.

10. Application of the method according to any one of Claims 1 to 7 to a multicarrier modulation of OFDM type, acronym of orthogonal frequency division multiplexing, combined with the TDMA, acronym of time division multiple access, access technique.

11. Reception circuit able to determine the time offset and/or the strength of a received signal incorporating a reference sequence and transmitted by multicarrier modulation on a set of carriers spaced apart from each other by a distance $n.\Delta f$, where n is a natural integer and $\Delta f$ is a constant, **characterized in that** it comprises:

    - means for determining a phase variation representative of the phase variation existing between two components, on two carriers $k.\Delta f$ apart, of the reference sequence of the received signal, for at least two consecutive values of the integer k,
    - means for applying an inverse Fourier transform to the representative phase variations obtained in order to obtain the impulse response of the signal,
    - means for determining the time offset and/or the strength of the received signal from the impulse response, by observing the higher level amplitude peak.

12. Receiver of signals of the type incorporating a reference sequence and transmitted by multicarrier modulation on a set of carriers spaced apart from each other by a distance $n.\Delta f$, where n is a natural integer and $\Delta f$ is a constant, **characterized in that** it comprises a reception circuit according to Claim 11.

**Patentansprüche**

1. Verfahren zur Bestimmung der Zeitverzögerung und/oder Leistung eines empfangenen Signals, das eine Bezugssequenz (3) aufweist und durch Mehrträgermodulation auf einer Gruppe (M) von Trägerfrequenzen gesendet wird, die in einer Distanz von $n\Delta f$ voneinander beabstandet sind, wo n eine natürliche Ganzzahl ist und $\Delta f$ eine Konstante ist, **dadurch gekennzeichnet, dass** es Folgendes aufweist:

    - Bestimmen einer Phasenänderung, die für die zwischen zwei Komponenten bestehende Phasenänderung charakteristisch ist, auf zwei in $k\Delta f$ entfernten Trägerfrequenzen, von der Bezugssequenz des empfangenen Signals, für mindestens zwei aufeinander folgende Werte der Ganzzahl k,
    - Anwenden einer inversen Fourier-Transformation auf die erhaltenen charakteristischen Phasenänderungen, um eine Impulsantwort (RI) des Signals zu erhalten,
    - Bestimmen der Zeitverzögerung $\tau_0$ und/oder Leistung des empfangenen Signals ausgehend von der Impulsantwort durch Beobachtung der höchsten Amplitudenspitze.

2. Verfahren nach Anspruch 1, wobei die Komponente auf einer Trägerfrequenz der Bezugssequenz des empfangenen Signals durch Multiplikation der Komponente ($C_{j,p}$) des auf der Trägerfrequenz empfangenen Signals mit der Spiegelfrequenz ($C^*_{j,p}$) der Komponente auf dieser Trägerfrequenz der Bezugssequenz erhalten wird.

3. Verfahren nach Anspruch 2, wobei die charakteristische Phasenänderung für einen Wert von k durch Berechnen des Mittels der Phasenänderungen mehrerer Paare von durch in $k\Delta f$ entfernten Trägerfrequenzen getragenen Komponenten der empfangenen Bezugssequenz bestimmt wird.

4. Verfahren nach einem der Ansprüche 1 und 3, wobei, wenn kein Paar von in $k\Delta f$ entfernten Trägerfrequenzen existiert, für diesen Wert von k der Wert null als Phasenänderung festgehalten wird.

5. Verfahren nach einem der Ansprüche 1 und 3, wobei, wenn kein Paar von in $k\Delta f$ entfernten Trägerfrequenzen existiert, das Mittel der charakteristischen Phasenänderungen, die für die benachbarten Werte von k erhalten werden, als Phasenänderung für diesen Wert von k festgehalten wird.

6. Verfahren nach Anspruch 1, wobei für jeden Wert der Ganzzahl k zuerst die Phasenänderung zwischen zwei Komponenten des empfangenen Signals berechnet wird, die durch eine erste und eine zweite in $k\Delta f$ entfernte Trägerfrequenz getragen werden, dann die charakteristische Phasenänderung durch Multiplizieren der erhaltenen Phasenänderung mit dem Produkt der Komponente auf der ersten Trägerfrequenz der Bezugssequenz und von der Spiegelfrequenz der Komponente auf der zweiten Trägerfrequenz der Bezugssequenz bestimmt wird.

7. Verfahren nach Anspruch 6, wobei für jeden Wert der Ganzzahl k die Phasenänderung zwischen einerseits einer Grundkomponente des auf einer Grundträgerfrequenz (Yp) empfangenen Signals, die unter den verwendeten Trägerfrequenzen ausgewählt wird, und andererseits einer Komponente, die erhalten wird, indem die Grundkomponente k mal um einen Zwischenträgerfrequenz-Zwischenraum $\Delta f$ verzögert wird, berechnet wird.

8. Anwendung des Verfahrens nach einem der Ansprüche 1 bis 7 auf eine Mehrträgermodulation des Typs OFDM, Akronym für Orthogonal Frequency Division Multiplex, in Verbindung mit einem Zugriffsverfahren des Typs MC-CDMA, Akronym für Multi-Carrier - Coded Division Multiple Access, Mehrfachzugriff mit Codeaufteilung.

9. Anwendung des Verfahrens nach einem der Ansprüche 1 bis 7 auf eine Mehrträgermodulation des Typs OFDMA, das heißt eine Mehrträgermodulation des Typs OFDM, Akronym für Orthogonal Frequency Division Multiplex, in Verbindung mit einem Zugriffsverfahren des Typs FDMA, Akronym für Frequency Division Multiple Access.

10. Anwendung des Verfahrens nach einem der Ansprüche 1 bis 7 auf eine Mehrträgermodulation des Typs OFDM, Akronym für Orthogonal Frequency Division Multiplex, in Verbindung mit einem Zugriffsverfahren des Typs TDMA, Akronym für Time Division Multiple Access.

11. Empfangsschaltung, die in der Lage ist, die Zeitverzögerung und/oder Leistung eines empfangenen Signals zu bestimmen, das eine Bezugssequenz aufweist und durch Mehrträgermodulation auf einer Gruppe von Trägerfrequenzen gesendet wird, die in einer Distanz von $n.\Delta f$ voneinander beabstandet sind, wo n eine natürliche Ganzzahl und $\Delta f$ eine Konstante ist, **dadurch gekennzeichnet, dass** sie Folgendes aufweist:

- Mittel zum Bestimmen einer Phasenänderung, die für die zwischen zwei Komponenten bestehende Phasenänderung charakteristisch ist, auf zwei in $k.\Delta f$ entfernten Trägerfrequenzen, von der Bezugssequenz des empfangenen Signals, für mindestens zwei aufeinander folgende Werte der Ganzzahl k,
- Mittel zum Anwenden einer inversen Fourier-Transformation auf die erhaltenen charakteristischen Phasenänderungen, um eine Impulsantwort des Signals zu erhalten,
- Mittel zum Bestimmen der Zeitverzögerung und/oder Leistung des empfangenden Signals ausgehend von der Impulsantwort durch Beobachtung der höchsten Amplitudenspitze.

12. Empfänger für Signale des Typs, der eine Bezugssequenz aufweist und durch Mehrträgermodulation auf einer Gruppe von Trägerfrequenzen gesendet wird, die in einer Distanz von $n.\Delta f$ voneinander beabstandet sind, wo n eine natürliche Zahl ist und $\Delta f$ eine Konstante ist, **dadurch gekennzeichnet, dass** er eine Empfangsschaltung nach Anspruch 11 aufweist.

**Fig. 1**

**Fig. 2**

**Fig. 3**

**Fig. 4**

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6038275 A, Mitsubishi